Europäisches Patentamt

European Patent Office

Office européen des brevets

(19)

(11) Veröffentlichungsnummer: **0 151 198**

**B1**

(12) # EUROPÄISCHE PATENTSCHRIFT

(45) Veröffentlichungstag der Patentschrift:
**04.01.89**

(21) Anmeldenummer: **84101067.9**

(22) Anmeldetag: **03.02.84**

(51) Int. Cl.⁴: **B 30 B 15/00,** B 30 B 15/26,
G 05 B 19/42

(54) Druckregeleinrichtung in Pressen.

(43) Veröffentlichungstag der Anmeldung:
**14.08.85 Patentblatt 85/33**

(45) Bekanntmachung des Hinweises auf die Patenterteilung:
**04.01.89 Patentblatt 89/1**

(84) Benannte Vertragsstaaten:
**DE FR GB IT SE**

(56) Entgegenhaltungen:
**DE-A-2 446 346**
**DE-A-2 624 733**
**FR-A-2 180 294**

**ELEKTRONIK, Band 32, Nr. 6, März 1983, Seiten 111-114, München, DE; "Konzept für ein Pressen-Optimierungssystem"**

(73) Patentinhaber: **L. SCHULER GmbH, Bahnhofstrasse 41 - 67 Postfach 1222, D-7320 Göppingen (DE)**

(72) Erfinder: **Braitinger, Helmut, Helferichstrasse 5, D-7320 Göppingen (DE)**
Erfinder: **Feinauer, Otto, Trübauer Weg 68, D-7320 Göppingen (DE)**

EP 0 151 198 B1

## Beschreibung

Die Erfindung betrifft eine Presse mit einer Druckregeleinrichtung nach dem Oberbegriff des Anspruchs 1.

Die einzelnen druckverbrauchenden Stationen einer Presse, Stufen- oder Mehrstufenpresse sowie Pressen einer Pressenstraße sind zumindest zum Teil mit sehr unterschiedlich hohen Drücken zu beaufschlagen. Während des Einrichtens einer Presse ist es notwendig, die während des Otimierens eingestellten Werte und Zwischenwerte abrufbar und diese für die Bedienperson auch zwischenzeitlich sichtbar zu machen.

Es ist eine Einrichtung aus der DE-OS-2 446 346 bekannt geworden, bei der Veränderliche einer Presse bei Wechsel des Werkzeuges über eine Druckregeleinrichtung eingestellt werden. Die Druckverbraucher sind an einen Druckspeicher angeschlossen, dessen Druckwerte über eine Vergleichsanordnung regelbar sind. In die vom Druckerzeuger zum Druckspeicher führende Druckleitung ist eine spannungsgesteuerte druckregelnde Ventileinheit eingebracht zum Druckaufbau bei zu geringen und zum Druckabbau bei zu hohen Druckwerten in dem Druckspeicher. Hierzu wird der Druck in dem Druckspeicher über einen Drucksensor abgefragt. Das Istsignal wird in einem Vergleichsglied mit dem Sollwert einer Druckvorgabe in einem Spannungsvergleich verglichen. Das Differenzsignal steht als Signal zur Druckwertbildung an der Ventileinheit an.

Die Druckschrift nennt eine Verknüpfungseinrichtung, mit der es möglich ist, Anfangszustände der Presse einzustellen und die eingestellten Werte zu kontrollieren, ohne die Verknüpfungseinrichtung näher zu beschreiben. Die Presseneinstellung erfolgt automatisch nach Programm, nachdem die Werte eingestellt sind. Die Druckschrift lehrt nicht Möglichkeiten zur Anpassung mehrerer mit unterschiedlichem Druck zu beaufschlagender Druckverbraucher, die Beseitigung der hierdurch in vermehrtem Maß auftretenden Schwierigkeiten des Presseneinrichtens, die Vermeidung der Schwierigkeiten durch einen entsprechenden schaltungstechnischen Aufbau sowie Möglichkeiten zur Übernahme und Wiederverwendung der im Teach-In-Betrieb ermittelten, optimierten Werte.

Desweiteren ist in der Fachzeitschrift ELEKTRONIK, Band 32, Nr. 6, März 1983, Seiten 111 bis 114, unter dem Titel "Konzept für ein Pressen-Optimierungssystem" eine Druckregeleinrichtung gattungsbildender Art beschrieben. Mit diesem Pressen-Optimierungssystem ist eine direkte Steuerung zwischen einer Druckregeleinheit und einer Ventileinheit nicht vorgenommen worden. Es sind weiterhin keine externen Speichermittel vorhanden, in denen Maschinendaten und Werkzeugdaten abgelegt werden können, mit denen die Ist-Werte von druckabfragenden Mitteln immer dann verglichen werden, wenn von bewegten Teilen der Presse Signale zur Freigabe der Druckregeleinheiten geschaltet werden.

Demgegenüber ist es Aufgabe der Erfindung, die Einrichtphasen vor und während des Teach-In-Betriebes für die Bedienperson wesentlich zu verbessern und der Bedienperson Möglichkeiten der einfachen Kontrolle des Einfahrbetriebes und die Verwendung dieser Daten für spätere Anwendung zu eröffnen. Hierbei sollen weiterhin aufgabegemäß neue Schaltungs-Techniken genutzt und -Bauteile für einen neuen Einrichtbetrieb der Presse zur Anwendung kommen.

Diese Aufgabe wird entsprechend dem Kennzeichnungsteil des Anspruchs 1 gelöst.

In Weiterbildung der Merkmale nach dem Patentanspruch 1 erfolgt in erfindungswesentlicher Weise der Datenverkehr nach Patentanspruch 2 über die Möglichkeit der Adressierung durch eine als Multiplexer ausgebildete Auswahlschaltung zur Datenübertragung zwischen den Reglern und der speicherprogrammierbaren Steuerung zum Einzelaufruf jedes einzelnen Reglers. Hierdurch sind die Voraussetzungen für den Einzelaufruf jedes Reglers und für eine wesentliche Verringerung der von der Schnittstelle zur speicherprogrammierbaren Steuerung und zu den weiteren peripheren Einheiten führenden Leitungen geschaffen.

Über den gezielten und damit zuverlässigen Anruf der Istwerte der einzelnen Druckregeleinheiten hinausgehend schafft die bevorzugte Weiterbildung der Druckregeleinrichtung mit den Merkmalen nach dem Patentanspruch 3 das Ansprechen auf vorbestimmte bzw. vorbestimmbare Verfahrensschritte, und es werden Fehleingaben und Fehlabspeicherungen vermieden. Die Bedienperson hat die Möglichkeit des Zugriffs und der Veränderung der Daten aufgrund fest vorgegebener Eingabeschritte.

Unter Bezugnahme auf das Ausführungsbeispiel in der Zeichnung soll die Erfindung nachfolgend näher erläutert werden.

In der Zeichnung ist dargestellt:

Fig. 1   in einem Blockschaltbild mit den an die Steuerung angeschlossene peripheren Bauteilen,

Fig. 2   mit dem strukturellen Aufbau der Druckregeleinheiten oder Schaltung nach Fig. 1 und in

Fig. 3   einzelne elektronische Baugruppen in ihrer Zuordnung zur Ausführung der Verfahrensschritte.

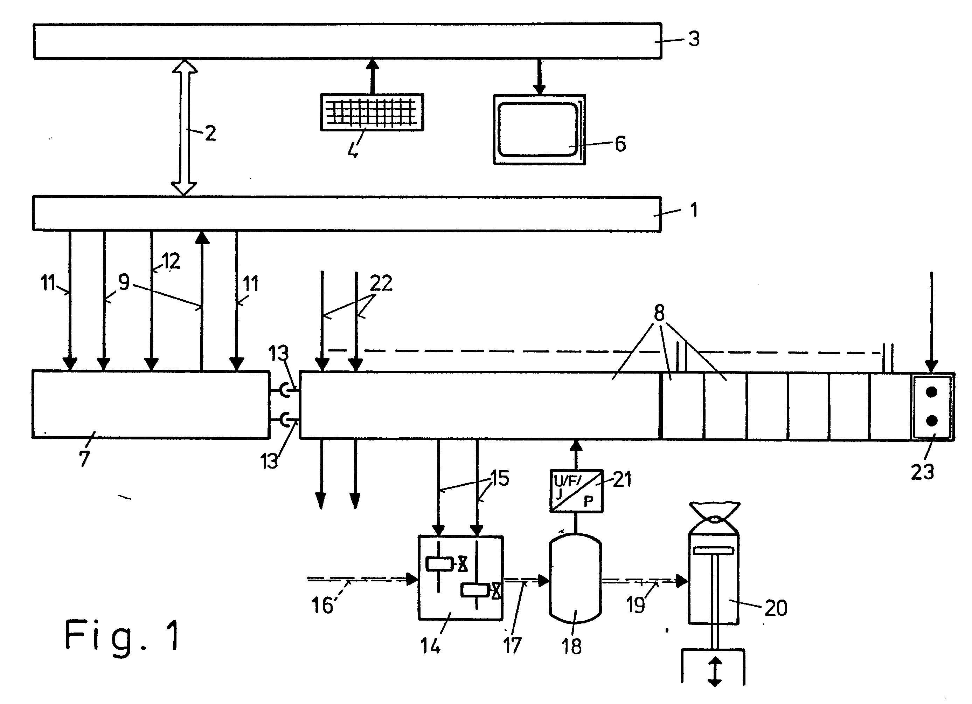

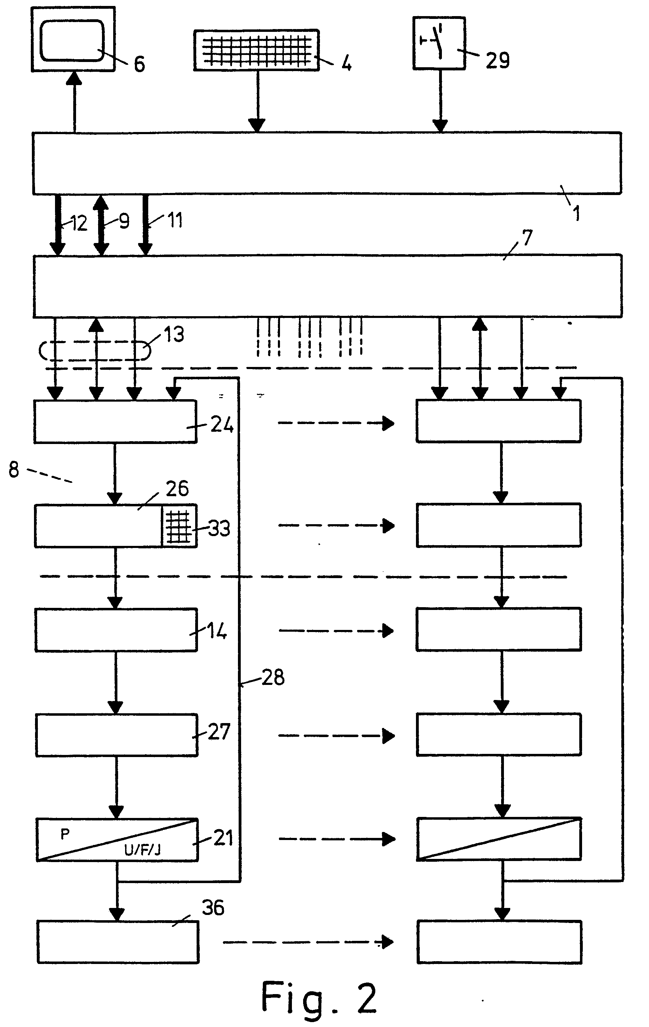

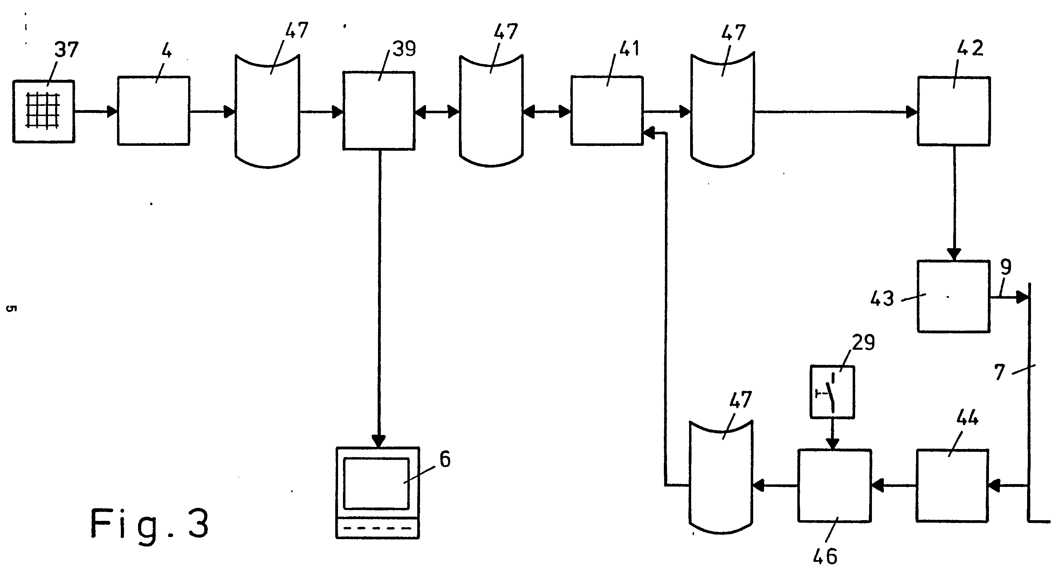

Fig. 1 zeigt eine speicherprogrammierbare Steuerung 1, im folgenden mit SPS bezeichnet, in Art der Steuerung nach der EP-PS-0 020 170 in einem in der Fig. 3 näher abgebildeten strukturellen Aufbau. Ein über eine Busleitung 2 angeschlossener Mikrocomputer 3, dessen Funktionsblöcke aus integrierten Halbleiterschaltungen hergestellt ist und dessen Mikroprozessoreinheit aus Speichern hier zur Anspeicherung von Text- und Daten besteht, stellt außerdem im wesentlichen die Verbindung zu einer peripheren Tastatur 4 für Text- und Dateneingabe und zu Mitteln zur visuellen Darstellung 6 von Daten und Text (Monitor) dar. Über eine Schnittstelle 7 sind hier beispielhaft sieben Druckregeleinheiten 8 an die SPS 1 geschaltet, die den strukturellen Aufbau nach der Fig. 2 aufweisen können. Die Verbindungen für einen Datenverkehr zwischen den Druckregeleinheiten 8 und der SPS 1 erfolgt zwischen dieser und der Schnittstelle 7 vermittels Datenbus 9, Adressenbus 11 und Steuerbus 12 und zwischen der Schnittstelle 7 und den Reglern 8 über eine Vielzahl von Leitungen 13.

Die Anzahl an Leitungen 13 ergibt sich aus der Notwendigkeit, Sollwerte an die Druckregeleinheiten 8 und Istwerte von diesen an die SPS 1 zu schalten. Die Leitungen 13 setzen sich gleichfalls aus Datenleitungen, Adressleitungen und Steuerleitungen zusammen. An jeder Druckregeleinheit 8 ist über Leitung 15 jeweils eine spannungsgesteuerte, druckregelnde Ventileinheit 14 angeschlossen, die einen Druckeingang 16 von einem Druckerzeuger und einen Druckausgang 17 zu einem Druckspeicher 18 aufweist. An den Druckspeicher 18 ist über eine weitere Druckleitung 19 jeweils ein Druckverbraucher 20, ggf. mehrere Druckverbraucher angeschlossen, wie beispielsweise die Druckkammer des Ziehapparates, des Stößelgewichtsausgleichs, der Werkstückauswerfereinheiten oder der Aktivgreifereinheiten. Die Abfrage der Druckspeicher 18 erfolgt jeweils über einen Druckspannungswandler oder Druckfrequenzwandler 21, der elektrisch an die zugehörenden Druckregeleinheit 8 angeschlossen ist. Die Druck-Sollwert-Vorgabe durch die manuellen Eingabe-Möglichkeiten oder gespeicherte Vorgabe führt zu einem Vergleich in der jeweils aufgerufenen Druckregeleinheit 8.

Der Zeitpunkt des Vergleichs kann wegen unterschiedlicher Drücke in jedem System während des Umformens, beispielsweise in Abhängigkeit von der Pressenkurbelwellen-, Schwungrad- oder Stößelstellung (dynamische Werte) erfolgen. Hierfür sind von einer Nockensteuerung oder/und der Kupplungssteuerung der Presse kommende Freigabeleitungen 22 an die Druckregeleinheiten 8 gelegt. Für die Strom-/Spannungsversorgung der Druckregeleinheiten 8 sowie für die daran angeschlossenen Ventileinheiten 14 ist ein Netzteil 23 vorgesehen. Monitor 6, Mikrocomputer 3 und speicherprogrammierbare Steuerung 1 weisen eigene Versorgungseinrichtungen in ebenfalls bekannter Weise auf.

Fig. 2 zeigt den strukturellen Aufbau der über den Multiplexer 7 (Schnittstelle) an die SPS 1 angeschlossenen Druckregeleinheiten 8. Diese umfassen im wesentlichen einen Speicherteil 24 zur Zwischenspeicherung von Soll- und Istwerten, die in dem Regelteil 26 verglichen werden und so zu einem druckerhöhenden oder druckmindernden Signal für die Ventileinheit 14 führen. Nach Ausführung 27 der Druckeinstellung auf dieses Signal hin erfolgt über den Drucksensor 21 eine Rückmeldung über die Leitung 28 an den Speicher 24. Die in dem Speicher 24 abgelegten Istwerte werden als Daten über den Datenbus 9 nach Betätigung einer Datenübernahmetaste 29 und entsprechender Adressierung der aufgerufenen Druckregeleinheit 8 über die Istwert-Adressenleitung 11 und die SPS 1 auf dem Monitor 6 dargestellt. Die Sollwert-Vorgabe erfolgt über manuell betätigbare Eingabetasten 33 am Regler 26 auf den Speicher 24 oder, wie es zu Fig. 3 noch zu beschreiben sein wird, bei entsprechender Adressierung der aufzurufenden Druckregeleinheit 8 über die Sollwert-Adressenleitung 12 und den Datenverkehr über den Datenbus 9. Jede Dateneingabe in den Speicher 24 kann an der Anzeigeneinheit 36 dargestellt werden. Fig. 2 läßt erkennen, daß die zu Fig. 1 beschriebenen Baueinheiten des dort mit 3 positionierten Mikrocomputers in die SPS 1 integriert sein können. Ebenso kann die Möglichkeit des Datenverkehrs und der Adressierung über in der SPS 1 integrierte I/O Bausteine erfolgen. Die zwischen dem Multiplexer 7 und jeder Druckregeleinheit 8 gezeigten Leitungen 13 verkörpern eine Vielzahl einzelner Leitungen des Daten- und Adressenverkehrs.

Die strukturelle Darstellung der Fig. 3 läßt den Datenfluß zwischen den peripheren Baugruppen wie Festwertspeicher 37, Eingabetastatur 4, Monitor 6 und Schnittstelle 7 erkennen. Die in der Sollwert-Vorgabe 4, 37 anstehenden Daten gelangen über eine Speichereinheit, Werkzeugdiagnose 39, an den Monitor 6 und über einen Transferbaustein 41, dieser dient zur Ausgabe der Sollwerte als auch zur Übernahme von in der Schnittstelle 7 anstehenden Istwerten, und den Übertragerbaustein 42 auf den Datenbus 9. Es versteht sich, daß der Datenverkehr anstelle der Multiplexer-Schnittstelle 7 über andere Schaltmöglichkeiten, wie beispielsweise I/O Ports, erfolgen kann. Die Baugruppen 43 für den Datenausgang und 44 für den Dateneingang kennzeichnen eine derartige Maßnahme.

Beim Betätigen der Datenübernahmetaste 29 werden die in dem Speicher 24 (Fig. 2) anstehenden Daten-Istwerte für den Druck über den Schnittstellenverkehr, eine Ausleseeinheit 46, den Transferbaustein 41 und den Werkzeugdiagnosebaustein 39 auf den Monitor 6 gegeben. Im Datenbaustein 47 sind die einzelnen Soll-Istwerte (Daten) der einzelnen Regler 8 hinterlegt.

## Patentansprüche

1. Presse mit einer Druckregeleinrichtung für den Druck des Ziehapparats, des Stößelgewichtsausgleichs, der Werkstückauswerfereinheiten und dgl. Druckverbraucher (20), mit druckerzeugenden (16), druckspeichernden (18) und druckabfragenden (21) Mitteln, mit Ventileinheiten (14) zur Einstellung des erforderlichen Druckes der Druckverbraucher (20) und mit einer speicherprogrammierbaren Steuerung (1) mit Auswahlschaltungen (7, 43, 44) für den Datentransfer, wobei die speicherprogrammierbare Steuerung (1) Schaltkreise und Speicher (37, 39, 47) aufweist zur Programmaufnahme, zur Programmänderung, zur Datenspeicherung und zum Datenvergleich, und mit manuell betätigbaren Zifferneingabemitteln (4) zur Eingabe von programmändernden und Druck-Soll-Werte darstellenden Daten verbunden ist, gekennzeichnet durch die Verwendung einer in Abhängigkeit unterschiedlicher Drücke erforderlichen Anzahl an Druckregeleinheiten (8), durch die Verwendung weiterer Speichermittel (24) in jeder Druckregeleinheit (8) zur Übernahme der Druck-Soll-Werte aus der speicherprogrammierbaren Steuerung (1), zur Abgabe solcher Daten an diese und zur Übernahme von Daten aus dem Zifferneingabemittel (4) und von Paten aus einem weiteren Zifferneingabemittel (33) in jeder Druckregeleinheit (8) und der Druck-Ist-Werte des angeschlossenen druckabfragenden Mittels (21), und durch die Verwendung eines Reglerteils (26) in jeder Druckregeleinheit (8), in dem die Druck-Ist-Sollwerte in dem Speichermittel (24) bei Aufruf der Druckregeleinheit (8) verglichen werden zur Abgabe eines Signals an die Ventileinheit (14) zur Druckerhöhung oder -minderung in dem angeschlossenen Druckspeicher (18), wobei der Aufruf der Druckregeleinheiten (8) nacheinander in Abhängigkeit von der Stellung eines pressenbeweglichen Teiles erfolgt.

2. Einrichtung nach Patentanspruch 1, gekennzeichnet durch eine als Multiplexer (7) ausgebildete Auswahlschaltung zur Datenübertragung zwischen den Druckregeleinheiten (8) und der speicherprogrammierbaren Steuerung (1) zum Einzelaufruf jeder einzelnen Druckregeleinheit (8).

3. Einrichtung nach Patentanspruch 1, mit Mitteln (6) zur visuellen Darstellung von Daten und Test, gekennzeichnet durch eine im Griffbereich der Bedienperson manuell auslösbare Datenübernahmetaste (29) und durch eine in der speicherprogrammierbaren Steuerung (1) aktivierbare Routine, dargestellt durch Daten-, Funktions- sowie Speicherbausteine (37, 38, 39, 41, 42, 43, 44, 46, 47), über die bei betätigter Datenübernahmetaste (29) die anstehenden Istwerte von den einzeln abrufbaren Druckregeleinheiten (8) einerseits in Speichern (37, 39) übernommenen und andererseits vermittels der Darstellungsmittel (6) sichtbar gemacht werden.

## Claims

1. Press with a pressure-control device for the pressure of the drawing apparatus, of the slide weight compensation, of the workpiece ejector units and similar pressure consumers (20), with pressure-generating (16), pressure-accumulating (18) and pressure-inquiring (21) means, with valve units (14) for setting the necessary pressure of the pressure consumers (20) and with a stored program control (1) with selection circuits (7, 43, 44) for data transfer, the stored program control (1) having circuits and memories (37, 39, 47) for program entry, for program amendment, for data storage and for data comparison and being connected to manually operable numerical input means (4) for the input of program-amending data and data representing pressure setpoint values, characterized by the use of a number of pressure-control units (8), the number necessary depending on different pressures, by the use of further storage means (24) in each pressure-control unit (8) for the acceptance of pressure setpoint values from the stored program control (1), for the delivery of such data to the latter and for the acceptance of data from the numerical input means (4) and of data from a further numerical input means (33) in each pressure-control unit (8) and of the pressure actual values of the connected pressure-inquiring means (21), and by the use of a controller part (26) in each pressure-control unit (8), in which the pressure actual/setpoint values are compared in the storage means (24) when the pressure-control unit (8) is called up, for the delivery of a signal to the valve unit (14) for pressure increase or reduction in the connected pressure accumulator (18), the call-up of the pressure-control units (8) taking place successively, depending on a position of the press-moving part.

2. Device according to Patent Claim 1, characterized by a selection circuit, designed as a multiplexer (7), for data transfer between the pressure-control units (8) and the stored program control (1) for the individual call-up of each individual pressure-control unit (8).

3. Device according to Patent Claim 1, with means (6) for the visual representation of data and text, characterized by a manually releasable data acceptance key (29), within reach of the operator, and by an activatable routine in the stored program control (1), represented by data modules, function modules and memory modules (37, 38, 39, 41, 42, 43, 44, 46, 47), by means of which it is possible, when the data acceptance key (29) is operated, on the one hand to accept in memories (37, 39) the actual values received from the individual pressure-control units (8) capable of being called and on the other hand to make such values visible by means of the display means (6).

**Revendications**

1. Presse comportant un dispositif de régulation de la pression pour la pression de l'appareil d'étirage, du dispositif d'équilibrage du coulisseau, des groupes éjecteurs des pièces et récepteurs analogues de pression (20), comportant aussi des moyens de production de la pression (16), de mise en réserve de la pression (18) et d'interrogation de la pression (21), comportant aussi des groupes de vannes (14) pour régler la pression nécessaire pour les récepteurs de pression (20) et comportant aussi un dispositif de commande (1) programmable par mémoire et présentant des circuits de sélection (7, 43, 44) pour le transfert des données, étant précisé que le dispositif de commande (1) programmable par mémoire présente des circuits de commutation et des mémoires (37, 39, 47) pour réception des programmes, pour modification des programmes, pour mémorisation des données et pour comparaison des données et étant précisé que ce dispositif de commande (1) est relié avec des moyens (4) d'entrée de digits manoeuvrables manuellement pour l'entrée de données modifiant les programmes et de données représentant des valeurs prescrites de la pression, caractérisée par l'emploi du nombre nécessaire, en fonction des différentes pressions, de groupes (8) de régulation de la pression, par l'emploi d'autres moyens de mémorisation (24) dans chaque groupe (8) de régulation de la pression pour transmettre les valeurs prescrites de la pression provenant du dispositif de commande (1) programmable par mémoire, pour donner de telles données à ce dispositif de commande et pour transmettre des données provenant du moyen (4) d'entrée des digits et des données provenant d'un autre moyen (33) d'entrée des digits prévu dans chaque groupe (8) de régulation de la pression, ainsi que des valeurs réelles de la pression du moyen (21), relié, d'interrogation de la pression; et par l'emploi d'une partie formant régulateur (26) qui est prévue dans chaque groupe (8) de régulation de la pression et dans laquelle les valeurs réelles et prescrites de la pression qui sont dans le moyen de mémorisation (24) lors de l'appel du groupe (8) de régulation de pression sont comparées pour envoyer un signal au groupe de vannes (14) pour augmenter ou diminuer la pression dans le réservoir de pression(18) relié, étant précisé que l'appel des groupes (8) de régulation de la pression se fait l'un après l'autre en fonction de la position d'une pièce mobile de la presse.

2. Dispositif selon la revendication 1, caractérisé par un circuit de sélection, conçu comme multiplexeur (7), pour transmettre les données entre les groupes (8) de régulation de la pression et le dispositif de commande (1) programmable par mémoire pour appeler individuellement chacun des différents groupes (8) de régulation de la pression.

3. Dispositif selon la revendication 1, comportant des moyens (6) pour représenter visuellement les données et le texte, caractérisé par une touche (29) de transmission des données pouvant être déclenchée manuellement dans la zone de saisie de l'opérateur; et par une routine qui peut être activée par le dispositif de commande (1) programmable par mémoire et qui est repésentée par des modules de données, de fonction et de mémoire (37, 38, 39, 41, 42, 43, 44, 46, 47), par l'intermédiaire desquels, lorsque l'on manoeuvre la touche (29) de transmission des données, les valeurs réelles existantes provenant des différents groupes (8) de régulation de la pression qui peuvent être appelés, d'une part sont transmises dans les mémoires (37, 39) et d'autre part sont rendues visibles au moyen d'un moyen de visualisation (6).

Fig. 1

Fig. 2

Fig.3

EP 0 151 198 B1